# EUROPÄISCHE PATENTANMELDUNG

(11) **EP 1 555 177 A2**
(43) Veröffentlichungstag der Anmeldung: **20.07.2005**
(21) Anmeldenummer: 04026047.3
(22) Anmeldetag: 03.11.2004
(51) Int. Cl.: B60S 9/08

(54) **Höhenverstellbare Stütze für Sattelauflieger oder dergleichen**

(30) Priorität: 16.01.2004 DE 202004000592 U
(71) Anmelder: Georg Fischer Verkehrstechnik GmbH, 78224 Singen (DE)
(72) Erfinder: Riedl, Reinhold, 63897 Miltenberg (DE)
(74) Vertreter: Weiss, Wolfgang, Dr.

(57) **Zusammenfassung**

Die Erfindung betrifft eine höhenverstellbare Stütze für Sattelauflieger mit einem ortsfest angebrachten Stützenaußenrohr, einem darin längsverschiebbar angeordneten Stützeninnenrohr und einer Getriebeausgangswelle auf der drehfest ein Zahnrad und ein ebenfalls drehfestes Kegelradritzel sitzen, wobei das Kegelradritzel zu einem Spindeltrieb gehören, über den das Stützeninnenrohr bewegt wird, wenn das besagte Zahnrad abwechselnd über ein Motorantriebsritzel oder ein Handantriebsritzel angetrieben wird, oder dass oberhalb der Getriebeausgangswelle kein Handantriebsritzel vorhanden ist, welches das Zahnrad antreibt. In die Stütze (10) ist ein horizontal, quer über oder und seitlich über der Achse der Spindel (17) angeordneter Motor (29) eingebaut und auf dessen Welle sitzt ein Ritzel (30). Der Wellenzapfen des Motor (29) weist eine dem Ritzel (30) adäquate Verzahnung auf. Diese Verzahnung ist in alleinigem Eingriff mit dem Zahnrad (28) oder treibt alternativ fallweise das Handantriebsritzel eines vorbekannten Handantriebsmechanismuses das Zahnrad 28 an. In der Stütze (10) ist eine Abschalteinrichtung vorhanden, die den automatischen Stopp des Motors (29) bewerkstelligt, wenn der Stützenfuß (15) auf den Boden aufgesetzt hat.

## Beschreibung

Die Erfindung bezieht sich auf eine höhenverstellbare Stütze für Sattelauflieger oder dergleichen gemäß dem Oberbegriff des Anspruchs 1. Derartige Stützen sind, in meist paarweiser Anordnung, am vorderen Bereich des Sattelaufliegers angeordnet.

Eine gattungsgemäße Stütze ist aus der DE 203 07 381 U1 bekannt. Dabei ist auf der Getriebeausgangswelle ein Zahnrad drehfest befestigt, welches alternativ über ein Motorantriebsritzel oder ein Handantriebsritzel angetrieben wird. Der Motor sitzt außen an der Stütze.

Aus dem EP 1 104 369 B1 ist eine so genannte Vorrichtung zum Abstützen eines Aufliegers eines Sattelschleppers bekannt. Hier wird ungünstiger Weise, anstatt einer wechselweisen manuellen oder motorischen Betriebsbereitschaft, lediglich in alternativen Ausgestaltungen entweder eine Sattelaufliegerstütze mit Handantrieb oder eine andere mit Motorantrieb vorgeschlagen. Zudem befindet sich der Motor auch außerhalb des Stützenrohrkörpers und steht davon ab.

Bei derartigen Ausgestaltungen von Sattelaufliegerstützen besteht eine störungs- und somit kostenträchtige Beschädigungsgefahr durch die abstehenden Motoren, welche diese Einheiten auch sperrig machen und außerdem ihr Aussehen negativ beeinflussen.

Der Erfindung liegt die Aufgabe zugrunde, eine Stütze für Sattelauflieger auch mit Motorantrieb zu schaffen, die robust ist, kompakt baut und optisch gediegen wirkt. Außerdem soll der Motorantrieb automatisch abschaltend sein.

Diese Aufgabe ist erfindungsgemäß durch die im Anspruch 1 gekennzeichnete Stütze gelöst.

Bei dieser Erfindung ist der Motor horizontal, parallel zur Achse ihrer Getriebeausgangswelle quer in die Sattelaufliegerstütze eingebaut. Die Motorbefestigung erfolgt in der Stützenwandung, in dem vorteilhafter Weise auch das Motorritzel gelagert ist, welches in das Zahnrad auf der Getriebeausgangswelle eingreift.

Einbau- und kostengünstiger Weise kann das genannte Zahnrad und das mit dem ebenfalls auf der Getriebeausgangswelle festzusetzenden Kegelrad miteinander verbunden werden oder mit diesem einstückig, d. h. als eine Einheit gestaltet sein. Besonders vorteilhaft, ist es diese Einheit oder Einzelräder auf der Abtriebseite anzuordnen.

Alternativ dazu kann auch das Zahnrad mit einer Nabe versehen werden, die gemeinsam mit der Getriebeausgangswelle abgelagert werden kann.

Wenn der Motor mit seinem Wellenschaft in Richtung Rückseite der Stütze weisend in diese eingebaut wird und sein Ritzel mit einen überstehenden Lagerzapfen versehen wird, kann über diesen das Ritzel mit der darin steckenden Motorwelle abgelagert werden. Erfindungsgemäß erfolgt die Lagerung in einer geschlossenen Bundbuchse die in der Rückwand des Stützenaußenrohres und der Anschraubplatte der Stütze sitzt. Bei dieser zweckmäßigen, weil Platz sparenden Lagerung, ist der Motor gegen ein Flanschsegment, durch das einen Freiraum für den Kämmbereich des Motorritzels mit dem anzutreibenden Zahnrad auf der Getriebeausgangswelle gegeben ist, der Motor montagefreundlich von außen anschraubbar. Für den Motor kann bei dieser Gestaltung ein relativ großer Bauraum in der Stütze genutzt werden. Im Fall, dass ein längerer Motor eingesetzt werden soll, bietet diese Anordnung zudem den Vorteil, dass wenn bei einer geringfügig größeren Motorlänge das Motorende die vordere, mit einem Montageausschnitt versehene, Wand des Stützenaußenrohres überragen kann. Durch eine entsprechende örtliche Auswölbung geringer Tiefe in der, bei dem im ersten Ausführungsbeispiel vertikal bündigen Abschlussbereich einer Verschlusskappe, kann dann das Motorende einfach abgedeckt werden. Bei geringfügig dickerem Motor kann in ähnlicher Weise mittels einer entsprechenden Auswölbung der Verschlusskappe nach oben verfahren werden.

Wenn das vom Motor anzutreibende Zahnrad als Einzelrad auf der der Abtriebseite der Getriebeausgangswelle gegenüberliegend, d. h. in Richtung Vorderseite der Stütze platziert wird und das Kegelrad einzeln als Ritzel abtriebseitig auf der Getriebeausgangswelle verbleibt, ist der erfindungsgemäße Antrieb ebenfalls zu realisieren.

Das gleiche gilt, wenn die ganze obige Radeinheit bestehend aus dem, vom Motorritzel anzutreibenden, Zahnrad und dem Kegelrad oder und, bei anderen Getriebekonfigurationen, ggf. einem weiteren Zahnrad, sich innen an der Vorderwand der Stütze befinden.

Bei diesen Ausgestaltungen braucht der Motor lediglich umgedreht befestigt und sein Ritzel entsprechend, in einem abnehmbaren Teil an der Vorderseite, gelagert zu werden.

Nach einem anderen Gedanken der Erfindung ist vorgesehen, dass der Stützenaußenrohrköper horizontal geteilt ist und der Motorantrieb oder und ein Handantriebsmechanismus, gemäß der Erfindung nach DE 203 07 381 U1, in einem abnehmbaren oberen haubenartigen, jedoch vorzugsweise auch hinten offenen Gehäuseteil, eingebaut ist.

Dazu wird vorgeschlagen den Teilungsstoß höhenmäßig, vorzugsweise so zu legen, dass der vordere Gehäusebereich der Lagerungen der Getriebeausgangswelle geteilt ist, vorzusehen.

Diese Ausgestaltung hat den Vorteil, dass die komplette Antriebskombination oder auch nur der Handantriebsmechanismus als Baugruppe separat vom Stützenhauptkörper vormontiert werden kann und dann nur auf das Hauptteil der Stütze aufgesetzt und gegen die Anschraubfläche angesetzt zu verschrauben ist. Und bei Stützen ohne Antrieb statt dessen lediglich eine kleine Abdeckhaube aufzusetzen ist.

Diese einfachen Aufbauten können günstigerweise erst bei der Stützenendmontage erfolgen, wodurch bei der Produktion eine Serienspaltung, gegenüber der lediglich mit anzutreibenden Stützen, ohne Antrieb, weitgehend vermieden wird. Außerdem bietet diese Ausgestaltung große Vorteile logistischer, wartungs- und reparaturmäßiger Art.

Damit bei motorischem Betrieb die Sattelaufliegerstütze automatisch abschaltet, wenn beim Absattelvorgang ihr Fuß auf den Boden des Absattelortes aufgesetzt hat, ist erfindungsgemäß eine Abschalteinrichtung vorgesehen. Dafür wird ein Endschalter vorgeschlagen, der an oder in der Mutter des Spindeltriebs befestigt ist und daher im Antriebsfall mit dieser vertikal ab- und auffährt.

Wenn die formschlüssige Verbindung zwischen der Mutter und dem Stützeninnenrohr mit Vertikalspiel versehen wird, ist eine Relativbewegungsmöglichkeit der genannten Bauteile zueinander gegeben. Nach der Erfindung sind dazu in der Wandung des Stützeninnenrohres lediglich, für die in diese hineinragenden Tragbolzen, vertikale Langlöcher vorzusehen.

Durch die Relatiwerschiebung des Stützeninnenrohres zur Mutter wird bei einer Schaltfeldüberdeckung des Endschalters, wofür eine berührungslose Art vorgeschlagen wird, durch einen einfache Kontaktgeber in der genannten Positionen des Stützeninnenrohres der Motor gestoppt.

Vorteilhafte Ausgestaltungen der Erfindung gehen aus den Unteransprüchen hervor.

Die Erfindung wird anschließend anhand der Zeichnungen erläutert. Es zeigen:
- Fig. 1: eine Frontansicht der erfindungsgemäßen Stütze,
- Fig. 2: eine Seitenansicht der in Fig. 1 gezeigten Stütze,
- Fig. 3: einen Längsschnitt der Stütze entlang der Linie A-A in Fig. 1.

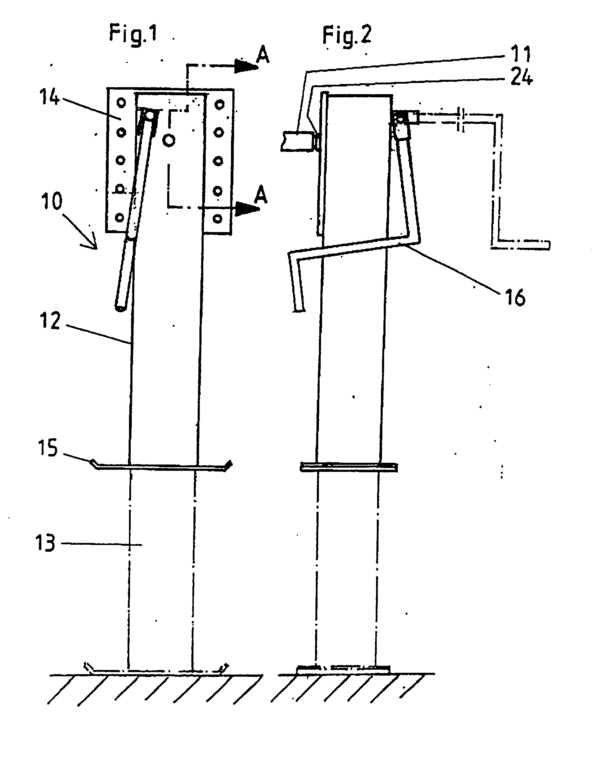

Die in Fig. 1 bis 3 gezeigte Stütze 10 wird paarweise am Chassis eines Sattelaufliegers in dessen vorderen Bereich befestigt und ist in Transportstellung eingefahren, d. h. in verkürztem Zustand. Bevor der Sattelauflieger vom Sattelschlepper abgekuppelt wird, werden die Stützen 10 ausgefahren.

Da die Stützen 10 eines jeden Paares im Aufbau annähernd gleich sind bzw. weil die meistens von einer ersten Stütze 10 aus über eine Verbindungswelle 11 mit angetriebene zweite sich hauptsächlich nur durch ein einfacheres Getriebe, mit lediglich einer Kegelradstufe, von der ersten unterscheidet, genügt es eine antriebseitige Stütze 10 zu beschreiben.

Die Stütze 10 weist einen Stützenaußenrohr 12 und ein darin längsverschiebbar gelagertes Innenrohr 13 auf.

Das Stützenaußenrohr 12 und das Stützeninnenrohr 13 besitzen einen quadratischen Querschnitt.

Die Stütze 10 wird mit einer auf ihrer Rückseite über eine am Stützenaußenrohr 12 sitzenden Anschraubplatte 14 am Sattelauflieger befestigt.

Am unteren Ende des Stützeninnenrohres 13 ist ein Fuß 15 zur Abstützung am Boden befestigt.

An der Vorderseite der Stütze 10 befindet sich eine wegschwenkbare Handkurbel 16 für den manuellen Antrieb.

Die Stütze 10 weist eine Spindel 17 mit einer Mutter 18 auf.

In der Mutter 18 stecken seitlich überstehende Tragbolzen 19, die in vertikale Langlöcher 20, die sich im oberen Endbereich des Stützeninnenrohres 13 befinden, hineinragen und dieses tragen. Außerdem weist die Mutter 18 einen nach unten gerichteten Tragrand 18a auf, der dem Profil des Stützeninnenrohres 13 entspricht.

Auf der Schulter der Spindel 17 sitzt eine Scheibe auf der sich ein Axiallager 21 befindet, das sich an einer Lagerplatte 22 abstützt.

Die Lagerplatte 21 ist in das Stützenaußenrohr 12 eingeschweißt und besitzt zur Radiallagerung der Spindel 17 eine durchgehende Lagerbohrung 22a.

Über der Lagerplatte 22 befindet sich auf einem Zapfen der Spindel 17 ein mit diesem verstiftetes Kegelrad 23.

Im Zentrum der Stütze 10 und oberhalb des Kegelrades 23 ist eine Getriebeausgangswelle 24 angeordnet, die in den Rohrwänden des Stützenaußenrohres 12, auf der Vorderseite der Stütze 10 in einer außen geschlossenen Bundbuchse 25 und auf der Rückseite, außen überstehend, in einer Buchse 26 gelagert ist.

Auf der Getriebeausgangswelle 24 sitzen abtriebseitig, auf einer Vielkeilverzahnung als Einheit ein durchmesserkleineres Kegelrad 27 und ein Zahnrad 28.

Oberhalb der Getriebeausgangswelle 24, parallel zu dieser angeordnet und seitlich verlagert befindet sich ein Motor 29 auf dessen Antriebswelle ein drehfestes Ritzel 30 sitzt.

Das Ritzel 30 besitzt vom Motor 29 wegweisend einen Lagerzapfen 30a, mit dem es in einer geschlossenen Bundbuchse 31, die in der Wand des Stützenaußenrohres 12 und in der Anschraubplatte 14 sitzt, gelagert ist und in das Zahnrad 28 eingreift.

Der Motor 29 ist gegen ein Flanschsegment 32 von der Anschraubplatte 14 aus festgeschraubt.

Als automatische Abschalteinrichtung sind in die Stütze 10 ein berührungsloser Endschalter 33 und ein Schalthaken 34 eingebaut.

Der Endschalter 33 sitzt in der Mutter 18 und wird somit mit dieser auf- oder abbewegt.

Der Schalthaken 34 ist innen am Stützeninnenrohr 13 befestigt und fährt mit diesem auf oder ab.

Die Anschlusskabel 35 des Endschalters 33 sind durch Kabelkanäle 18b und 22b in der Mutter 18 und der Lagerplatte 22 hindurchgeführt.

Im veränderlichen Freiraum zwischen der Mutter 18 und der Lagerplatte 22 sind die Anschlusskabel 35 wendelartig verlegt damit sie sich beim Auf- und Abfahren des Stützeninnenrohres 13 schraubenfederartig aufziehen bzw. zusammenlegen.

Am obern Ende des Stützenaußenrohres 12 sitzt eine Verschlusskappe 36, die dessen Querschnitt und einen auf der Vorderseite des Stützenaußenrohres 12 befindlichen Montageausschnitt 37 für den Motor 29 hermetisch verschließt.

Die automatische Abschalteinrichtung funktioniert wie folgt:

Während der Fahrt oder im stehenden, aufgesattelten Zustand des Sattelzuges hängt das Stützeninnenrohr 13 mit den oberen Rändern seiner Langlöcher 20 auf den Tragbolzen 19. Wenn zum Zweck des Absattelns das Stützeninnenrohr 13 unbelastet motorische ausgefahren wird, setzt alsbald der Fuß 15 auf den Boden des Absattelstandorts auf und hält das Stützeninnenrohr 13 an. Die Mutter 18 fährt jedoch weiter abwärts und übt gegenüber dem Stützeninnenrohr 13 eine Relativbewegung aus. Wenn die Mutter 18 um den Schaltweg S weiter abgelaufen ist, aktiviert der Schalthaken 34 den Endschalter 33 und dieser schaltet den Motor ab. Etwas zeitversetzt danach, während des Auslaufens des Spindeltriebs, setzt die Mutter 18 mit ihrem Tragrand 18a auf die Stirnseite des Stützeninnenrohr 13 auf, weil der Verschiebeweg T bis zur Tragbereitschaft der Mutter 18 nur geringfügig größer als der Schaltweg S ist. Alternativ kann, bei Vorsehen einer etwas größeren Differenz zwischen S und T, die Lastübernahme der Mutter 18 auch erst durch einen kleinen Setzvorgang nach dem Absatteln erfolgen.

Bei einem Aufsattelvorgang wird, nach Übernahme der anteiligen Traglast des Aufliegers durch den Sattelschlepper das Stützeninnenrohr 13 der Stütze 10 motorisch hoch gefahren, wobei das Stützeninnenrohr 13 nach einem minimalen Leerhub der Mutter 18, entsprechend T, von den Tragbolzen 19 mitgenommen wird.

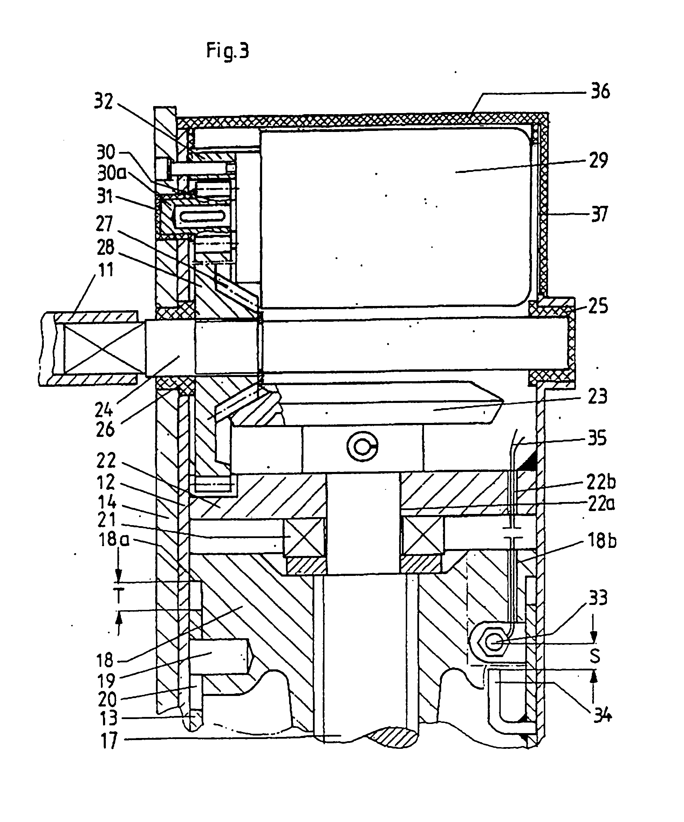

Ein vorteilhafter Weise parallel zum beschriebenen motorischen Antrieb im Stützenaußenrohr angeordneter Handantriebsmechanismus, wie in den Fig. 1 und Fig. 2 äußerlich dargestellt, ist hier nicht gezeigt und beschrieben, zumal er außerhalb der Schnittebene der Fig. 3 liegt und Merkmal der Erfindung gemäß DE 203 07 381 U1 ist.

### Bezugszeichenliste

- 10: Stütze
- 11: Verbindungswelle
- 12: Stützenaußenrohr
- 13: Stützeninnenrohr
- 14: Anschraubplatte
- 15: Fuß
- 16: Handkurbel
- 17: Spindel
- 18: Mutter
- 18a: Tragrand
- 18b: Kabelkanal
- 19: Tragbolzen
- 20: Langloch
- 21: Axiallager
- 22: Lagerplatte
- 22a: Lagerbohrung
- 22b: Kabelkanal
- 23: Kegelrad
- 24: Getriebeausgangswelle
- 25: Bundbuchse
- 26: Bundbuchse
- 27: Kegelrad
- 28: Zahnrad
- 29: Motor
- 30: Ritzel
- 30a: Lagerzapfen
- 31: Bundbuchse
- 32: Flanschsegment
- 33: Endschalter
- 34: Schalthaken
- 35: Anschlusskabel
- 36: Verschlusskappe
- 37: Montageausschnitt

## Patentansprüche

1. Höhenverstellbare Stütze für Sattelauflieger oder dergleichen mit einem ortsfest angebrachten Stützenaußenrohr, einem darin längsverschiebbar angeordneten Stützeninnenrohr und einer Getriebeausgangswelle auf der drehfest ein Zahnrad und ein ebenfalls drehfestes Kegelradritzel sitzen, wobei das Kegelradritzel zu einem Spindeltrieb gehörend über den das Stützeninnenrohr bewegt wird, wenn das besagte Zahnrad abwechselnd über ein Motorantriebsritzel oder ein Handantriebsritzel angetrieben wird, oder dass oberhalb der Getriebeausgangswelle kein Handantriebsritzel vorhanden ist, welches das Zahnrad antreibt **dadurch gekennzeichnet, dass** in die Stütze (10) ein horizontal, quer über oder und seitlich über der Achse der Spindel (17) angeordneter Motor (29) eingebaut ist und auf dessen Welle ein Ritzel (30) sitzt oder, dass der Wellenzapfen des Motor (29) eine dem Ritzel (30) adäquate Verzahnung aufweist und diese Verzahnung in alleinigem Eingriff mit dem Zahnrad (28) ist oder, dass alternativ fallweise das Handantriebsritzel eines vorbekannten Handantriebsmechanismuses das Zahnrad 28 antreibt, und dass in der Stütze (10) eine Abschalteinrichtung vorhanden ist, die den automatischen Stopp des Motors (29) bewerkstelligt, wenn der Stützenfuß (15) auf den Boden aufgesetzt hat.

2. Stütze nach Anspruch 1, **dadurch gekennzeichnet, dass** der Motor (29) sich längenmäßig, von der Achse der Spindel (17) aus gesehen, sowohl zur Vorderseite der Stütze (10) als auch in Richtung deren Rückseite hin erstreckt.

3. Stütze nach Anspruch 1, **dadurch gekennzeichnet, dass** der Motor (29) so in die Stütze (10) eingebaut ist, dass sein Wellenzapfen zu deren Rückseite weist.

4. Stütze nach Anspruch 1, **dadurch gekennzeichnet, dass** der Motor (29) so in die Stütze (10) eingebaut ist, dass sein Wellenzapfen zu deren Vorderseite weist.

5. Stütze nach Anspruch 1, **dadurch gekennzeichnet, dass** das Zahnrad (28) und das durchmesserkleinere Kegelrad (27) auf der Abtriebseite der Getriebeausgangswelle (24) eingebaut sind.

6. Stütze nach Anspruch 1 **dadurch gekennzeichnet, dass** das durchmesserkleinere Kegelrad (27) auf Abtriebseite der Getriebeausgangswelle (24) angeordnet ist und das Zahnrad (28) auf der entgegengesetzten Seite sitzt.

7. Stütze nach Anspruch 1, **dadurch gekennzeichnet, dass** das Zahnrad (28) und das durchmesserkleinere Kegelrad (27) zusammen ein einstückiges Bauteil sind.

8. Stütze nach Anspruch 1, **dadurch gekennzeichnet, dass** das Zahnrad (28) eine abstehende Nabe aufweist, mit der es konzentrisch mit der Getriebeausgangswelle (24) gemeinsam abgelagert ist.

9. Stütze nach Anspruch 1, **dadurch gekennzeichnet, dass** das auf dem Motor (29) sitzende Ritzel (30) vor seiner Verzahnung einen überstehenden Lagerzapfen (30a) aufweist mit dem es in einer Bundbuchse (31 ), die in der Wandung des Stützenaußenrohres (12) und der Anschraubplatte (14), oder bei entgegengesetzer Motoranordnung in einem, am Stützenaußenrohr (12) befestigten Teil, gelagert ist.

10. Stütze nach Anspruch 1, **dadurch gekennzeichnet, dass** der Motor (29) von außerhalb der Stütze (10) aus festgeschraubt ist.

11. Stütze nach Anspruch 1, **dadurch gekennzeichnet, dass** der Motor (29) an einem Flanschsegment (32) sitzt, das etwas dicker als die Zahnbreite des Zahnrades (28) ist und einen Freiraum aufweist in dem das Ritzel (30) und das Zahnrad (28) mit einander kämmen.

12. Stütze nach Anspruch 1, **dadurch gekennzeichnet, dass** zur Befestigung des Motors (29) und zur Lagerung des Ritzels (30) ein Motor/Lagerträger vorhanden ist.

13. Stütze nach Anspruch 1, **dadurch gekennzeichnet, dass** das Motorritzel (30) permanent im Eingriff mit dem Zahnrad (28) steht.

14. Stütze nach Anspruch 1, **dadurch gekennzeichnet, dass** das Ritzel (30) einen aktiven Verzahnungsbereich aufweist, der schmäler als die Zahnbreite des Zahnrades (28) ist.

15. Stütze nach Anspruch 1, **dadurch gekennzeichnet, dass** die Verbindung zwischen dem Stützeninnenrohr (13) und der Mutter (18) so gestaltet ist, dass diese Bauteile eine leichtgängige Relatiwerschiebung um einen Betrag T zueinander möglich ist.

16. Stütze nach Anspruch 1, **dadurch gekennzeichnet, dass** das Stützeninnenrohr (13) in ihrem oberen Bereich mindestens ein Langloch (20) besitzt in das ein zugeordneter Tragbolzen (19) hineinragt, der in der Mutter (18) steckt und der die Relatiwerschiebung der Mutter (18) gegenüber dem Stützeninnenrohr (13) begrenzt.

17. Stütze nach Anspruch 1, **dadurch gekennzeichnet, dass** mindestens eine Federelement vorhanden ist, dessen Kraft die Massenschwerkraft des Stützeninnenrohres (13) zuzüglich der des Fußes (15) beim Verlassen der Transportstellung unterstützend, die Langlöcher () in Anschlag mit den Tragbolzen (19) bringt.

18. Stütze nach Anspruch 1, **dadurch gekennzeichnet, dass** die Abschalteinrichtung aus einem Endschalter (33) und einem Schalthaken (34) besteht, der im Stützeninnenrohr (13) befestigt ist.

19. Stütze nach Anspruch 18, **dadurch gekennzeichnet, dass** der Endschalter (33) in oder an der Mutter (18) befestigt ist.

20. Stütze nach Anspruch 18, **dadurch gekennzeichnet, dass** der Endschalter (33) berührungsloser Art ist, der abschaltet wenn er mit seinem Schaltfeld den Schalthaken (34) ertastet.

21. Stütze nach Anspruch 18, **dadurch gekennzeichnet, dass** die Anschlusskabel (35) des Endschalters (33) durch einen Kabelkanal (18b) in der Mutter (18) und einen Kabelkanal (22b) in der Lagerplatte (22) geführt sind.

22. Stütze nach Anspruch 18, **dadurch gekennzeichnet, dass** die Anschlusskabel (36) im Freiraum zwischen der Mutter (18) und der Lagerplatte (22) gewendelt angeordnet sind damit sie sich schraubenfederartig aufziehen und wieder verdichten können.

23. Stütze nach Anspruch 1, **dadurch gekennzeichnet, dass** der Endschalter (33) der Abschalteinrichtung am Stützeninnenrohr (13) befestigt ist und direkt die dazu relatiwerschiebliche Mutter (18) oder ein an dieser befestigtes Teil abtastet.

24. Stütze nach Anspruch 1, **dadurch gekennzeichnet, dass** zum Abdecken der Stütze (10) eine Verschlusskappe (36) vorhanden ist, die auf dem Rand des Stützenaußenrohres (12) sitzt und seitlich einen vertikalen Bereich aufweist, welcher auch den für die Montage des Motors (29) im Stützenaußenrohr (12) vorhandenen Montageausschnitt (37) abdeckt.

25. Stütze nach Anspruch 1, **dadurch gekennzeichnet, dass** die Verschlusskappe (37) auf der Vorderseite eine Auswölbung aufweist, in die ein etwas über das Stützenaußenrohr (12) überstehender Motor (29) hineinragen kann und abgedeckt wird.

26. Stütze nach Anspruch 1, **dadurch gekennzeichnet, dass** die Verschlusskappe (37) auf ihrer oberen Seite eine Auswölbung nach oben aufweist, in die ein etwas dickerer Motor (29) hineinreicht und abgedeckt wird.

27. Stütze nach Anspruch 1, **dadurch gekennzeichnet, dass** das Stutzenaußenrohr (12) oben gekürzt und dort ein abnehmbares haubenartiges Gehäuse, das auch seitlich offen sein kann, angeordnet ist, in das als eine separate Baugruppe der Motorantrieb oder und ein Handantriebsmechanismus, gemäß der Erfindung nach DE 203 07 381 oder nur letzterer eingebaut ist.

28. Stütze nach Anspruch 26, **dadurch gekennzeichnet, dass** das vordere Lager der Getriebeausgangswelle (24) zum Zweck des Aufbaus der abnehmbaren Baugruppe als horizontale Schnittstelle mittig geteilt ist.
